# FASCICULE DE BREVET EUROPEEN

(11) **EP 3 356 076 B1**
(45) Date de publication et mention de la délivrance du brevet: **27.10.2021**
(21) Numéro de dépôt: 16777802.6
(22) Date de dépôt: 30.09.2016
(51) Int. Cl.: B23H 7/10, B23H 7/20, B23H 11/00

(54) **PROCEDE ET DISPOSITIF D'IDENTIFICATION DE FIL D'ELECTROEROSION SUR BOBINE, ET APPLICATION AUX USINAGES PAR MACHINE D'ELECTROEROSION A FIL**
VERFAHREN UND VORRICHTUNG ZUR IDENTIFIZIERUNG EINES FUNKENEROSIONSDRAHTES AUF EINER SPULE UND ANWENDUNG ZUR BEARBEITUNG MITTELS EINER DRAHTFUNKENEROSIONSMASCHINE
METHOD AND DEVICE FOR IDENTIFYING A SPARK-EROSION WIRE ON A COIL, AND APPLICATION TO MACHINING BY A WIRE SPARK-EROSION MACHINE

(30) Priorité: 02.10.2015 FR 1559408
(43) Date de publication de la demande: 08.08.2018
(73) Titulaire: THERMOCOMPACT, 74370 Epagny Metz-Tessy (FR); Agie Charmilles SA, 6616 Losone (CH)
(72) Inventeur: DESCAILLOT, Philippe, 74230 Dingy Saint Clair (FR); LY, Michel, 74000 Annecy (FR); MOLLARD, Gilles, 74000 Annecy (FR); OUVRARD, Blanche, 74000 Annecy (FR)
(74) Mandataire: Cabinet Poncet
(86) Numéro de dépôt international: PCT/IB2016/055853
(87) Numéro de publication internationale: WO 2017/056045

(56) Documents cités:
- EP-A1- 0 505 570
- JP-A- H11 179 617
- JP-A- S63 169 225
- US-A- 4 689 457
- US-A- 5 453 592

## Description

### DOMAINE TECHNIQUE DE L'INVENTION

La présente invention concerne les dispositifs d'usinage par électroérosion à fil, dans lesquels un fil métallique continu à faible diamètre, dévidé d'une bobine sur laquelle il est conditionné, traverse dans une machine d'électroérosion une zone d'usinage emplie d'un diélectrique approprié. Dans la zone d'usinage, un tronçon du fil est tenu par des guidages à proximité d'une pièce à usiner qui est elle-même conductrice de l'électricité. Un générateur de courant électrique est connecté entre le fil et la pièce à usiner, produisant des arcs électriques entre le fil et la pièce à usiner. Les arcs électriques provoquent l'usure du fil et de la pièce. Pour compenser l'usure du fil, celui-ci est déplacé en permanence selon sa direction longitudinale dans la zone d'usinage. En suivant l'usure réalisée sur la pièce, le fil est progressivement déplacé vers la pièce par la machine d'électroérosion, réalisant ainsi sur la pièce à usiner une découpe par enlèvement de matière.

L'efficacité de l'enlèvement de matière sur la pièce à usiner dépend de nombreux paramètres, et notamment : la puissance électrique délivrée par le générateur de courant électrique, la puissance électrique que peut supporter le fil sans se rompre pendant l'usinage, la vitesse de déplacement longitudinal du fil, la structure du fil lui-même, la tension mécanique que le fil peut supporter sans se rompre, l'agitation du diélectrique dans la zone d'usinage, la facilité d'introduction du fil dans la zone d'usinage et dans les guidages de la machine d'électroérosion en début d'usinage.

En fonction de ces paramètres, l'enlèvement de matière sur la pièce à usiner peut être plus ou moins rapide, caractérisé par une vitesse d'usinage ou vitesse de pénétration du fil dans la pièce à usiner.

En fonction de ces paramètres, l'usinage réalisé peut être plus ou moins précis, caractérisé par une précision de la découpe réalisée sur la pièce, caractérisé également par un état de surface des faces découpées de la pièce ainsi obtenue.

Un grand nombre de ces paramètres qui caractérisent la qualité et l'efficacité de l'usinage par électroérosion sont déterminés par le fil lui-même, dans sa forme, sa structure, sa composition, ses propriétés.

Une difficulté, dans la mise en œuvre d'un procédé d'usinage par électroérosion à fil, réside dans le choix approprié des paramètres d'usinage qu'il faut entrer dans le programme de la machine d'électroérosion. En effet, tous les fils d'électroérosion n'ont pas les mêmes propriétés, et cela nécessite d'adapter fortement le programme de la machine d'électroérosion à chaque type de fil d'électroérosion, et même à chaque bobine d'un certain type de fil d'électroérosion.

L'opérateur doit ainsi se renseigner sur la nature, la quantité et les qualités du fil d'électroérosion conditionné sur la bobine qu'il charge sur la machine d'électroérosion en début d'usinage, puis il doit rentrer ces informations dans le programme de la machine d'électroérosion, et il doit choisir les paramètres du programme en fonction des résultats d'usinage qu'il compte obtenir et en fonction des limites déterminées par les propriétés du fil d'électroérosion.

Les risques d'erreurs dans le choix des paramètres d'usinage sont relativement élevés, d'autant que certaines données sont généralement manquantes concernant le fil, notamment des données historiques propres à chaque bobine de fil.

Le document JP H11 179617 A décrit un dispositif d'identification d'un fil d'électroérosion conditionné sur une bobine, comprenant :
- un support de données d'identification, solidaire de la bobine et accessible pour la lecture de données d'identification qu'il supporte,
- des données d'identification dudit fil, portées par le support de données d'identification,
- le support de données d'identification étant un code-barres, apte à communiquer avec un dispositif lecteur de données associé à une machine d'électroérosion à fil pour la lecture des données d'identification portées par le support de données d'identification de la bobine.

Un tel dispositif n'est ni prévu ni adapté pour recevoir, en permanence ou périodiquement, des données historiques d'utilisation antérieure du fil d'électroérosion porté par la bobine.

### EXPOSE DE L'INVENTION

La présente invention a notamment pour objet de proposer des moyens permettant de faciliter, compléter et sécuriser l'identification d'un fil d'électroérosion porté par une bobine, afin que le choix des paramètres d'usinage dans une machine d'électroérosion à fil puisse ensuite tenir compte le mieux possible des capacités d'électroérosion du fil conditionné sur une bobine.

La présente invention a également pour objet de proposer des moyens permettant d'automatiser de façon plus complète et sécuritaire l'adaptation des paramètres d'électroérosion dans une machine d'électroérosion à fil en fonction des capacités propres à chaque fil d'électroérosion utilisé.

Pour atteindre ces buts ainsi que d'autres, selon un premier aspect, l'invention propose un dispositif d'identification d'un fil d'électroérosion conditionné sur une bobine, comprenant :
- un support de données d'identification, solidaire de la bobine et accessible pour la lecture de données d'identification qu'il supporte,
- des données d'identification dudit fil, portées par le support de données d'identification,
et dans lequel :
- le support de données d'identification est une radio-étiquette, apte à communiquer avec un dispositif lecteur de données associé à une machine d'électroérosion à fil pour la lecture et l'écriture des données d'identification portées par le support de données d'identification de la bobine,
- les données d'identification portées par le support de données d'identification comprennent des données historiques choisies à partir du groupe consistant en des données historiques d'utilisation décrivant des conditions d'utilisation antérieure du fil d'électroérosion porté par la bobine et des données historiques de contrainte décrivant des contraintes physiques auxquelles a été précédemment soumis le fil d'électroérosion porté par la bobine.

Un tel support de données d'identification à radio-étiquette peut contenir un grand nombre de données, nombre satisfaisant pour l'ensemble des paramètres permettant de caractériser efficacement le fil d'électroérosion et permettant un choix convenable des paramètres d'électroérosion sur la machine d'électroérosion. Un tel support de données d'identification comporte en outre une mémoire de taille suffisante pour recevoir et mémoriser, à tout moment et pendant toute la durée prévue d'utilisation du fil d'électroérosion, des données historiques venant s'ajouter, au fil du temps, aux données initiales enregistrées lors de la fabrication de la bobine de fil.

On comprend que les caractéristiques du fil, déterminant sa capacité d'électroérosion, peuvent ainsi être mises à jour en permanence ou périodiquement, et transmises à la machine d'électroérosion, de sorte que l'opérateur peut ainsi retrouver, dans la machine d'électroérosion, les informations nécessaires lui permettant de choisir les paramètres d'usinage les plus appropriés en fonction de ses besoins.

En alternative, le programme implémenté dans la machine d'électroérosion peut télécharger et utiliser de façon automatique les données d'identification reçues du support de données d'identification par l'intermédiaire du dispositif lecteur de données pour participer au choix des paramètres d'usinage.

En pratique, les données d'identification du fil peuvent comprendre des données historiques d'utilisation et/ou des données historiques de contrainte, ainsi que tout ou partie des informations initiales telles que :
- le type de fil,
- le diamètre du fil,
- l'état de recuit du fil,
- la longueur ou le poids de fil initialement disponible sur la bobine,
- la technologie d'usinage à employer sur la machine d'électroérosion, définie par le nom de la technologie ou les paramètres à employer pour un usinage,
- l'angle de dépouille maximal recommandé pour le fil,
- l'état de surface possible à réaliser avec le fil,
- les conditions d'arrosage préférables lors de l'usinage avec le fil,
- la vitesse d'érosion prévue lors d'un usinage avec le fil selon la technologie à employer.

Selon un mode de réalisation avantageux, le dispositif d'identification est tel que :
- il comprend en outre un dispositif lecteur de données, associé à une machine d'électroérosion à fil, apte à lire les données d'identification portées par le support de données d'identification de la bobine, et apte à transmettre les données d'identification à la machine d'électroérosion à fil,
- le dispositif lecteur de données est un dispositif de communication radiofréquence apte à communiquer avec la radio-étiquette.

De préférence, le dispositif d'identification comprend des moyens d'acquisition, implémentés dans la machine d'électroérosion, pour envoyer et mémoriser au fil du temps dans la radio-étiquette, par l'intermédiaire du dispositif de communication radiofréquence, des données historiques d'utilisation décrivant les conditions d'utilisation du fil d'électroérosion par ladite machine d'électroérosion.

En alternative ou en complément, la radio-étiquette peut être de type active ou semi-active, munie d'une source d'énergie électrique embarquée et associée à des capteurs embarqués et des moyens de mémorisation pour scruter et mémoriser les signaux produits par les capteurs embarqués, lesdits signaux constituant des données historiques de contrainte décrivant des contraintes physiques auxquelles est soumis le fil d'électroérosion porté par la bobine.

En pratique, lesdites données historiques d'utilisation peuvent comprendre une ou plusieurs données historiques choisies à partir du groupe consistant en :
- longueur ou poids de fil déjà consommé,
- alarmes d'enfilage ou d'usinage rencontrées antérieurement avec le fil porté par la bobine,
- programmes d'usinage, technologies d'usinage et paramètres employés antérieurement lors d'un usinage par électroérosion avec le fil porté par la bobine,
- nature des pièces usinées antérieurement avec le fil porté par la bobine,
- hauteur des pièces usinées antérieurement avec le fil porté par la bobine,
- dates et durées des usinages effectués antérieurement avec le fil porté par la bobine,
- passes d'usinage effectuées antérieurement avec le fil porté par la bobine.

De même, lesdites données historiques de contrainte peuvent comprendre une ou plusieurs des informations choisies à partir du groupe consistant en :
- accélérations subies par la bobine portant le fil, provenant d'un accéléromètre embarqué sur la radio-étiquette ou sur la bobine,
- température ambiante subie par la bobine portant le fil, provenant d'un capteur de température embarqué sur la radio-étiquette ou sur la bobine,
- hygrométrie subie par la bobine portant le fil, provenant d'un capteur d'humidité embarqué sur la radio-étiquette ou sur la bobine,
- longueur ou poids de fil déjà consommé.

Ces informations historiques de contrainte peuvent être utiles pour contrôler le maintien de la bonne qualité du fil d'électroérosion, depuis sa production en usine jusqu'au site d'utilisation par la machine d'électroérosion. Ces informations complémentaires peuvent être utilisées par la machine d'électroérosion pour générer une alarme, ou pour refuser l'utilisation du fil, ou pour adapter les paramètres d'usinage en fonction des modifications éventuellement subies par le fil avant l'étape d'usinage.

Grâce à l'accéléromètre, on peut connaître avec précision la quantité restante de fil sur la bobine. Pour cela, la radio-étiquette peut comprendre un circuit électronique de traitement ayant des moyens de calcul du nombre de tours effectués par la bobine autour de son axe en fonction des signaux d'accélération reçus de l'accéléromètre. Chaque inversion d'accélération +g/-g correspond en principe à un demi-tour de bobine. Ce nombre de tours est généralement représentatif de la consommation du fil dans la machine d'électroérosion (car il est rare de mettre un colis de bobines de fil en rotation lors de son transport).

On peut aussi, si l'étiquette comporte une horloge, mémoriser la date de la dernière rotation de la bobine (représentative de sa dernière utilisation).

Le nombre précis de tours de fil initialement présents sur la bobine peut avoir été enregistré pendant la fabrication de celle-ci, ou juste après (en relevant le compte-tours du bobinoir de la machine de production).

Selon un autre aspect, pour atteindre ces objets ainsi que d'autres, la présente invention propose un procédé d'identification d'un fil d'électroérosion conditionné sur une bobine munie d'un support de données d'identification portant des données d'identification dudit fil, procédé dans lequel on enregistre au fil du temps comme données d'identification, dans le support de données d'identification, des données historiques choisies à partir du groupe consistant en des données historiques d'utilisation décrivant des conditions de l'utilisation du fil porté par la bobine et des données historiques de contrainte décrivant des contraintes physiques auxquelles est soumis le fil porté par la bobine.

En pratique, dans un tel procédé d'identification, les données historiques d'utilisation peuvent comprendre une ou plusieurs données historiques choisies à partir du groupe consistant en :
- longueur ou poids de fil déjà consommé,
- alarmes d'enfilage ou d'usinage rencontrées antérieurement avec le fil porté par la bobine,
- programmes d'usinage, technologies d'usinage et paramètres employés antérieurement lors d'un usinage par électroérosion avec le fil porté par la bobine,
- nature des pièces usinées antérieurement avec le fil porté par la bobine,
- hauteur des pièces usinées antérieurement avec le fil porté par la bobine,
- dates et durées des usinages effectués antérieurement avec le fil porté par la bobine,
- passes d'usinage effectuées antérieurement avec le fil porté par la bobine.

De même, dans un tel procédé d'identification, les données historiques de contrainte peuvent comprendre une ou plusieurs des informations choisies à partir du groupe consistant en :
- accélérations subies par la bobine portant le fil, provenant d'un accéléromètre embarqué sur la radio-étiquette ou sur la bobine,
- température ambiante subie par la bobine portant le fil, provenant d'un capteur de température embarqué sur la radio-étiquette ou sur la bobine,
- hygrométrie subie par la bobine portant le fil, provenant d'un capteur d'humidité embarqué sur la radio-étiquette ou sur la bobine,
- longueur ou poids de fil déjà consommé.

Selon un autre aspect, pour atteindre ces objets ainsi que d'autres, la présente invention propose un dispositif d'usinage par électroérosion,
comprenant :
- une machine d'électroérosion à fil,
- un fil d'électroérosion conditionné sur une bobine,
- un support de données d'identification, solidaire de la bobine et accessible pour la lecture de données qu'il supporte,
- des données d'identification dudit fil, portées par le support de données d'identification,
- un dispositif lecteur de données, associé à la machine d'électroérosion à fil, apte à lire les données d'identification portées par le support de données d'identification bobine et des données historiques de contrainte décrivant des contraintes physiques auxquelles est soumis le fil porté par la bobine.

En pratique, dans un tel procédé d'identification, les données historiques d'utilisation peuvent comprendre une ou plusieurs données historiques choisies à partir du groupe consistant en :
- longueur ou poids de fil déjà consommé,
- alarmes d'enfilage ou d'usinage rencontrées antérieurement avec le fil porté par la bobine,
- programmes d'usinage, technologies d'usinage et paramètres employés antérieurement lors d'un usinage par électroérosion avec le fil porté par la bobine,
- nature des pièces usinées antérieurement avec le fil porté par la bobine,
- hauteur des pièces usinées antérieurement avec le fil porté par la bobine,
- dates et durées des usinages effectués antérieurement avec le fil porté par la bobine,
- passes d'usinage effectuées antérieurement avec le fil porté par la bobine.

De même, dans un tel procédé d'identification, les données historiques de contrainte peuvent comprendre une ou plusieurs des informations choisies à partir du groupe consistant en :
- accélérations subies par la bobine portant le fil, provenant d'un accéléromètre embarqué sur la radio-étiquette ou sur la bobine,
- température ambiante subie par la bobine portant le fil, provenant d'un capteur de température embarqué sur la radio-étiquette ou sur la bobine,
- hygrométrie subie par la bobine portant le fil, provenant d'un capteur d'humidité embarqué sur la radio-étiquette ou sur la bobine,
- longueur ou poids de fil déjà consommé.

Selon un autre aspect, pour atteindre ces objets ainsi que d'autres, la présente invention propose un dispositif d'usinage par électroérosion tel que défini par la revendication 11.

En pratique, dans un tel dispositif d'usinage par électroérosion, les moyens d'acquisition comprennent un circuit de commande de la machine d'électroérosion à fil et un programme informatique enregistré mis en oeuvre par ledit circuit de commande et comprenant une séquence d'acquisition qui génère, transmet et enregistre au fil du temps, dans le support de données d'identification, tout ou partie des données historiques d'utilisation du fil par la machine d'électroérosion à fil, lesdites données historiques d'utilisation du fil étant choisies à partir du groupe consistant en :
- longueur ou poids de fil consommé par la machine d'électroérosion à fil,
- alarmes d'enfilage ou d'usinage rencontrées par la machine d'électroérosion à fil avec le fil porté par la bobine,
- programmes d'usinage, technologies d'usinage et paramètres employés par la machine d'électroérosion à fil avec le fil porté par la bobine,
- nature des pièces usinées par la machine d'électroérosion à fil avec le fil porté par la bobine,
- hauteur des pièces usinées par la machine d'électroérosion à fil avec le fil porté par la bobine,
- dates et durées des usinages effectués par la machine d'électroérosion à fil avec le fil porté par la bobine,
- passes d'usinage effectuées par la machine d'électroérosion à fil avec le fil porté par la bobine.

En alternative ou en complément, dans un tel dispositif d'usinage par électroérosion, la radio-étiquette peut avantageusement être de type active ou semi-active, munie d'une source d'énergie électrique embarquée, et associée à des capteurs embarqués et des moyens de mémorisation pour scruter et mémoriser des signaux produits par les capteurs embarqués, lesdits signaux constituant des données historiques de contrainte comprenant une ou plusieurs des informations choisies à partir du groupe consistant en :
- accélérations subies par la bobine portant le fil, provenant d'un accéléromètre embarqué sur la radio-étiquette ou sur la bobine,
- température ambiante subie par la bobine portant le fil, provenant d'un capteur de température embarqué sur la radio-étiquette ou sur la bobine,
- hygrométrie subie par la bobine portant le fil, provenant d'un capteur d'humidité embarqué sur la radio-étiquette ou sur la bobine,
- longueur ou poids de fil déjà consommé.

Selon un autre aspect, la présente invention propose, pour atteindre ces objets ainsi que d'autres, un procédé d'usinage par électroérosion tel que défini par la revendication 14.

En pratique, dans un tel procédé d'usinage par électroérosion, les données historiques d'utilisation peuvent comprendre une ou plusieurs données historiques choisies à partir du groupe consistant en :
- longueur ou poids de fil déjà consommé,
- alarmes d'enfilage ou d'usinage rencontrées antérieurement avec le fil porté par la bobine,
- programmes d'usinage, technologies d'usinage et paramètres employés antérieurement lors d'un usinage par électroérosion avec le fil porté par la bobine,
- nature des pièces usinées antérieurement avec le fil porté par la bobine,
- hauteur des pièces usinées antérieurement avec le fil porté par la bobine,

Il est avantageux que le support de données d'identification contienne notamment l'identité du fabricant du fil, les coordonnées du fabricant du fil, et le numéro de série de la bobine. En pratique, la séquence d'acquisition peut alors comprendre l'acquisition d'au moins l'identité du fabricant du fil, ses coordonnées et le numéro de série de la bobine, et la séquence d'acquisition peut comprendre une séquence de téléchargement automatique de données relatives à la bobine de fil depuis un serveur informatique du fabricant.

Il est ainsi possible d'utiliser de préférence des données fournies au jour le jour par le fabricant, pouvant être plus complètes et plus fiables que les données présentes sur le support de données d'identification à la date de fabrication du fil.

Il peut être avantageux que, dans le procédé d'usinage par électroérosion selon l'invention, les données d'identification relatives à la bobine de fil comprennent notamment les paramètres d'usinage particuliers qu'il faut adopter pour optimiser l'usinage avec ladite bobine de fil.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :

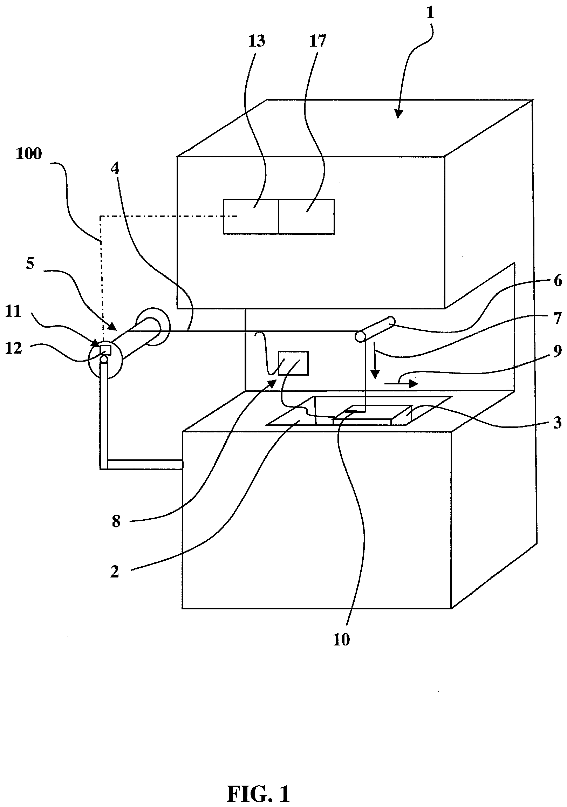

- la figure 1 est une vue schématique d'une machine d'électroérosion en cours d'usinage d'une pièce au moyen d'un fil conditionné sur une bobine selon un mode de réalisation de la présente invention ;

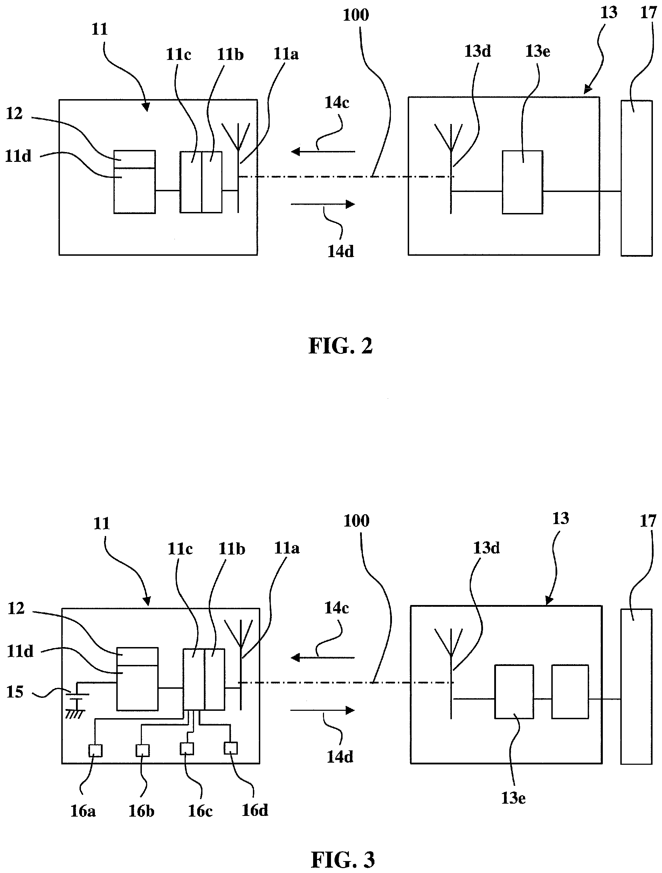

- la figure 2 illustre schématiquement un support de données d'identification de type radio-étiquette passive selon un premier mode de réalisation de la présente invention, communiquant par radiofréquence avec un dispositif lecteur de données associé à ou implémenté dans une machine d'électroérosion ; et
- la figure 3 illustre schématiquement un support de données d'identification de type radio-étiquette active ou semi-active selon un second mode de réalisation de la présente invention, communiquant par radiofréquence avec un dispositif lecteur de données associé à ou implémenté dans une machine d'électroérosion.

### DESCRIPTION DES MODES DE REALISATION PREFERES

On considère tout d'abord la figure 1, illustrant un dispositif d'usinage par électroérosion à fil selon un mode de réalisation de la présente invention.

Le dispositif d'usinage comprend de façon générale une machine d'électroérosion à fil 1 dans laquelle est prévue une zone d'usinage 2 remplie d'un diélectrique liquide approprié. La zone d'usinage 2 est conformée et structurée pour recevoir et maintenir une pièce à usiner 3. Un fil d'électroérosion 4, conditionné sur une bobine 5, est dévidé de la bobine 5 en passant sur des guidages 6 de la machine d'électroérosion 1 qui le maintiennent en position et qui l'entraînent en défilement longitudinal comme illustré par la flèche 7. Le fil d'électroérosion 4 traverse la zone d'usinage 2, dans laquelle il est maintenu à proximité de la pièce à usiner 3.

La machine d'électroérosion à fil 1 comporte en outre un générateur de courant électrique 8, connecté entre le fil d'électroérosion 4 et la pièce à usiner 3, pour produire des arcs électriques entre le fil d'électroérosion 4 et la pièce à usiner 3.

Lors du fonctionnement, les arcs électriques provoquent l'usure du fil d'électroérosion 4 et de la pièce à usiner 3. Le défilement longitudinal 7 permanent du fil d'électroérosion 4 dans la zone d'usinage 2 permet d'éviter la rupture du fil d'électroérosion 4 par suite de l'usure provoquée par les arcs électriques sur le fil. Par contre, l'usure provoquée sur la pièce 3 par les arcs électriques constitue un enlèvement de matière qui permet, par déplacement progressif relatif du fil d'électroérosion 4 vers la pièce 3, par exemple comme illustré par la flèche 9, de réaliser une découpe 10 sur la pièce à usiner 3.

Dans la zone d'usinage 2, le fil d'électroérosion 4 doit être tendu par traction mécanique longitudinale assurée par les guidages 6, afin de conserver une position géométrique stable et définie qui garantit une bonne géométrie de la découpe 10 effectuée sur la pièce à usiner 3.

En début d'usinage, il est nécessaire d'introduire l'extrémité libre du fil d'électroérosion 4 dans les guidages 6 et dans la zone d'usinage 2. Généralement, la machine d'électroérosion 1 comprend une séquence de fonctionnement assurant l'introduction automatique du fil. Toutefois, cela nécessite que le fil d'électroérosion 4 présente des propriétés satisfaisantes de rectitude et de rigidité pour que le guidage de son extrémité libre puisse être assuré lorsque les guidages 6 ne tiennent le fil que par des tronçons intermédiaires à l'écart de l'extrémité libre du fil.

Selon l'invention, le dispositif d'usinage comprend en outre un dispositif d'identification du fil d'électroérosion 4 conditionné sur la bobine 5.

Ce dispositif d'identification comprend en particulier un support de données d'identification 11 solidaire de la bobine 5, et des données d'identification 12 du fil portées par le support de données d'identification 11.

Le support de données d'identification 11 coopère avec un dispositif lecteur de données 13 associé à la machine d'électroérosion à fil 1, par l'intermédiaire d'une liaison sans fil 100 permettant la communication entre le support de données d'identification 11 et le dispositif lecteur de données 13.

Les figures 2 et 3 illustrent, à titre d'exemple, deux modes de réalisation du dispositif d'identification selon l'invention.

Sur la figure 2, le support de données d'identification 11 est une radio-étiquette passive, comprenant une antenne 11a, un circuit d'alimentation 11b apte à prélever une partie de l'énergie électrique captée par l'antenne 11a pour générer une tension d'alimentation alimentant les autres circuits électroniques de la radio-étiquette. Un circuit électronique de traitement 11c reçoit les signaux électroniques de requête 14c captés par l'antenne 11a, communique avec un circuit de mémorisation 11d contenant les données d'identification 12, et génère, en fonction des signaux électroniques de requête 14c, des signaux électroniques de réponse 14d qu'il transmet par l'antenne 11a. Par exemple, sur réception de signaux électroniques de requête 14c requérant la communication d'une identification, la radio-étiquette passive renvoie des signaux de réponse 14d contenant ladite identification extraite des données d'identification 12 du fil.

Dans ce cas, le dispositif lecteur de données 13 est un dispositif actif, émetteur de radiofréquences qui permettent d'activer à distance la radio-étiquette 11. Il comprend une antenne 13d et un circuit électronique 13e permettant d'une part de générer les signaux de requête 14c à transmettre par l'antenne 13d à la radio-étiquette 11, et d'autre part de traiter les signaux de réponse 14d reçus de la radio-étiquette 11 et captés par l'antenne 13d. La liaison sans fil 100 est une liaison radio.

Un exemple de réalisation de radio-étiquette et de dispositif lecteur de données est décrit dans le document US 4,724,427.

Sur la figure 3 le support de données d'identification 11 est une radio-étiquette active ou semi-active, dans laquelle on retrouve les principaux éléments du mode de réalisation de la figure 2, et notamment : une antenne 11a, un circuit d'alimentation 11b, un circuit électronique de traitement 11c, un circuit de mémorisation 11d, ayant les mêmes fonctions que celles du mode de réalisation de la figure 2. Sur la figure 3, le support de données d'identification 11 comprend en outre une source d'énergie électrique embarquée 15, capable d'alimenter en énergie électrique, en remplacement ou en complément de l'énergie électrique captée par l'antenne 11a, les circuits électroniques de traitement 11c et de mémorisation 11d.

Dans ce cas, le support de données d'identification 11 comprend en outre des capteurs embarqués, par exemple quatre capteurs embarqués 16a, 16b, 16c, 16d fournissant respectivement au circuit électronique de traitement 11c des signaux image de l'accélération subie par la bobine 5 portant le fil 4 et le support de données d'identification 11, des signaux image de la température ambiante, des signaux image de l'hygrométrie ambiante, des signaux image du poids de la bobine 5.

Le circuit électronique de traitement 11c est piloté par un programme comportant une séquence de mémorisation pour scruter et mémoriser, dans le circuit de mémorisation 11d, les signaux produits par les capteurs embarqués 16a, 16b, 16c et 16d.

Le programme du circuit électronique de traitement 11c peut avantageusement comporter une séquence de calcul du nombre de tours, pour calculer le nombre de tours effectués par la bobine 5 autour de son axe en fonction des signaux image des accélérations subies par la bobine 5, ces signaux étant reçus d'un capteur embarqué 16a de type accéléromètre.

Dans ce mode de réalisation de la figure 3, le dispositif lecteur de données 13 est également un dispositif actif émetteur de radiofréquences qui permettent éventuellement d'activer à distance la radio-étiquette 11, et comprenant une antenne 13d et un circuit électronique 13e pour générer d'une part des signaux de requête 14c envoyés à la radio-étiquette 11, et pour traiter d'autre part les signaux de réception 14d reçus de la radio-étiquette 11 et captés par l'antenne 13d. La liaison sans fil 100 est une liaison radio.

En se référant à nouveau à la figure 1, on considère sous la référence 17 le circuit de commande de la machine d'électroérosion 1, incluant un programme informatique.

Le programme informatique du circuit de commande 17 de la machine d'électroérosion 1 comprend au moins une séquence d'acquisition pour générer et enregistrer au fil du temps comme données d'identification 12 , dans le support de données d'identification 11, des données historiques choisies à partir du groupe consistant en des données historiques d'utilisation décrivant des conditions d'utilisation du fil d'électroérosion 4 porté par la bobine 5 et des données historiques de contrainte décrivant des contraintes physiques auxquelles est soumis le fil 4 d'électroérosion porté par la bobine 5.

Les données historiques d'utilisation sont en principe générées dans la machine d'électroérosion à fil 1, et envoyées sous forme de messages 14c au support de données d'identification 11.

Les données historiques de contrainte sont en principe générées par les capteurs 16a, 16b, 16c et 16d associés au support de données d'identification 11.

Le programme informatique du circuit de commande 17 de la machine d'électroérosion 1 comprend au moins une séquence de téléchargement de tout ou partie des données d'identification 12 portées par le support de données d'identification 11. La séquence de téléchargement pilote le dispositif lecteur de données 13 pour qu'il génère des signaux de requête 14c et les envoie au support de données d'identification 11, lequel lui renvoie alors sous forme de message 14d tout ou partie des données d'identification 12 qui, après réception par le dispositif lecteur de données 13, sont introduites dans le circuit de commande 17 de la machine d'électroérosion 1.

Le programme informatique du circuit de commande 17 de la machine d'électroérosion 1 comprend au moins une séquence d'adaptation des paramètres d'usinage, tenant compte notamment des données d'identification 12 provenant du support de données d'identification 11 de la bobine 5 utilisée pour l'usinage. De la sorte, le dispositif selon l'invention permet d'automatiser l'adaptation des paramètres d'électroérosion dans la machine d'électroérosion à fil 1 en fonction des capacités propres du fil d'électroérosion 4 utilisé. Par exemple, la séquence d'adaptation peut modifier ou limiter les paramètres de tension mécanique du fil d'électroérosion 4 dans la zone d'usinage 2, d'intensité du courant électrique parcourant le fil d'électroérosion 4 dans la zone d'usinage 2, de vitesse de déplacement longitudinal 7 du fil d'électroérosion 4 dans la zone d'usinage 2, d'agitation du diélectrique dans la zone d'usinage 2, de déplacement transversal 9 du fil d'électroérosion 4 dans la zone d'usinage 2.

En complément, la séquence d'adaptation peut comporter une séquence de génération d'alarme décelable par un opérateur, par laquelle une alarme est générée lorsque les conditions d'usinage programmées par l'opérateur sont conformes à des conditions d'usinage enregistrées dans le support de données d'identification 11 et ayant donné lieu antérieurement à des usinages défectueux à l'aide du même fil d'électroérosion 4.

Le téléchargement des données relatives au fil d'électroérosion 4 peut être direct, par simple interrogation du support de données d'identification 11 si celui-ci contient l'intégralité des données nécessaires.

En alternative, le téléchargement des données peut être en partie indirect, la séquence de téléchargement comprenant alors le téléchargement d'au moins l'identité du fabricant du fil 4 et le numéro de série de la bobine 5 par interrogation du support de données d'identification 11, et une séquence de téléchargement automatique de données relatives à la bobine 5 de fil 4 depuis un serveur informatique du fabricant en interrogeant le serveur informatique du fabricant par Internet au moyen des informations sur l'identité du fabricant du fil 4 et du numéro de série de la bobine 5.

Lors du fonctionnement, le programme informatique de la machine d'électroérosion 1 permet ainsi de mettre en œuvre un procédé d'usinage par électroérosion à fil dans lequel tout ou partie des données d'identification 12 du fil 4 sont téléchargées à partir d'un support de données d'identification 11 porté par la bobine 5 sur laquelle est conditionné le fil d'électroérosion 4 utilisé pour le procédé d'usinage. Les données d'identification 12 sont alors utilisées par le programme informatique de la machine d'électroérosion 1 pour adapter les paramètres d'usinage en tenant compte des données d'identification 12.

La présente invention n'est pas limitée aux modes de réalisation qui ont été explicitement décrits, mais elle en inclut les diverses variantes et généralisations contenues dans le domaine des revendications ci-après.

## Revendications

1. Dispositif d'identification d'un fil d'électroérosion (4) conditionné sur une bobine (5), comprenant :
- un support de données d'identification (11), solidaire de la bobine (5) et accessible pour la lecture de données d'identification (12) qu'il supporte,
- des donnés d'identification (12) dudit fil (4), portées par le support de données d'identification (11),
**caractérisé en ce que** :
- le support de données d'identification (11) est une radio-étiquette, apte à communiquer avec un dispositif lecteur de données (13) associé à une machine d'électroérosion à fil (1) pour la lecture et l'écriture des données d'identification (12) portées par le support de données d'identification (11) de la bobine (5),
- les données d'identification (12) portées par le support de données d'identification (11) comprennent des données historiques choisies à partir du groupe consistant en des données historiques d'utilisation décrivant des conditions d'utilisation antérieure du fil d'électroérosion (4) porté par la bobine (5) et des données historiques de contrainte décrivant des contraintes physiques auxquelles a été précédemment soumis le fil d'électroérosion (4) porté par la bobine (5).

2. Dispositif d'identification d'un fil d'électroérosion (4) conditionné sur une bobine (5) selon la revendication 1,
**caractérisé en ce que** :
- il comprend en outre un dispositif lecteur de données (13), associé à une machine d'électroérosion à fil (1), apte à lire les données d'identification (12) portées par le support de données d'identification (11) de la bobine (5), et apte à transmettre les données d'identification (12) à la machine d'électroérosion à fil (1),
- le dispositif lecteur de données (13) est un dispositif de communication radiofréquence apte à communiquer avec la radio-étiquette (11).

3. Dispositif d'identification d'un fil d'électroérosion (4) conditionné sur une bobine (5) selon la revendication 2, **caractérisé en ce qu'**il comprend des moyens d'acquisition (17), implémentés dans la machine d'électroérosion (1), pour envoyer et mémoriser au fil du temps dans la radio-étiquette (11), par l'intermédiaire du dispositif de communication radiofréquence (13), des données historiques d'utilisation décrivant les conditions d'utilisation du fil d'électroérosion (4) par ladite machine d'électroérosion (1).

4. Dispositif d'identification d'un fil d'électroérosion (4) conditionné sur une bobine (5) selon l'une quelconque des revendications 1 à 3, **caractérisé en ce que** la radio-étiquette (11) est de type active ou semi-active, munie d'une source d'énergie électrique embarquée (15) et associée à des capteurs embarqués (16a, 16b, 16c, 16d) et des moyens de mémorisation (11d) pour scruter et mémoriser les signaux produits par les capteurs embarqués (16a, 16b, 16c, 16d), lesdits signaux constituant des données historiques de contrainte décrivant les contraintes physiques auxquelles est soumis le fil d'électroérosion (4) porté par la bobine (5).

5. Dispositif d'identification d'un fil d'électroérosion (4) conditionné sur une bobine (5) selon l'une quelconque des revendications 1 à 4, **caractérisé en ce que** les données historiques d'utilisation comprennent une ou plusieurs données historiques choisies à partir du groupe consistant en :
- longueur ou poids de fil (4) déjà consommé,
- alarmes d'enfilage ou d'usinage rencontrées antérieurement avec le fil (4) porté par la bobine (5),
- programmes d'usinage, technologies d'usinage et paramètres employés antérieurement lors d'un usinage par électroérosion avec le fil (4) porté par la bobine (5),
- nature des pièces usinées antérieurement avec le fil (4) porté par la bobine (5),
- hauteur des pièces usinées antérieurement avec le fil (4) porté par la bobine (5),
- dates et durées des usinages effectués antérieurement avec le fil (4) porté par la bobine (5),
- passes d'usinage effectuées antérieurement avec le fil (4) porté par la bobine (5).

6. Dispositif d'identification d'un fil d'électroérosion (4) conditionné sur une bobine (5) selon l'une quelconque des revendications 1 à 5, **caractérisé en ce que** les données historiques de contrainte comprennent une ou plusieurs des informations choisies à partir du groupe consistant en :
- accélérations subies par la bobine (5) portant le fil (4), provenant d'un accéléromètre (16a) embarqué sur la radio-étiquette (11) ou sur la bobine (5),
- température ambiante subie par la bobine (5) portant le fil (4), provenant d'un capteur de température (16b) embarqué sur la radio-étiquette (11) ou sur la bobine (5),
- hygrométrie subie par la bobine (5) portant le fil (4), provenant d'un capteur d'humidité (16c) embarqué sur la radio-étiquette (11) ou sur la bobine (5),
- longueur ou poids de fil (4) déjà consommé.

7. Dispositif d'identification d'un fil d'électroérosion (4) conditionné sur une bobine (5) selon la revendication 6, **caractérisé en ce que** la radio-étiquette (11) comprend un accéléromètre (16a) et un circuit électronique de traitement (11c) ayant des moyens de calcul du nombre de tours effectués par la bobine (5) autour de son axe en fonction des signaux d'accélération reçus de l'accéléromètre (16a).

8. Procédé d'identification d'un fil d'électroérosion (4) conditionné sur une bobine (5) munie d'un support de données d'identification (11) portant des données d'identification (12) dudit fil (4), **caractérisé en ce que** :
- on enregistre au fil du temps comme données d'identification (12), dans le support de données d'identification (11), des données historiques choisies à partir du groupe consistant en des données historiques d'utilisation décrivant des conditions de l'utilisation du fil (4) porté par la bobine (5) et des données historiques de contrainte décrivant des contraintes physiques auxquelles est soumis le fil (4) porté par la bobine (5).

9. Procédé d'identification d'un fil d'électroérosion (4) conditionné sur une bobine (5) selon la revendication 8, **caractérisé en ce que** les données historiques d'utilisation comprennent une ou plusieurs données historiques choisies à partir du groupe consistant en :
- longueur ou poids de fil (4) déjà consommé,
- alarmes d'enfilage ou d'usinage rencontrées antérieurement avec le fil (4) porté par la bobine (5),
- programmes d'usinage, technologies d'usinage et paramètres employés antérieurement lors d'un usinage par électroérosion avec le fil (4) porté par la bobine (5),
- nature des pièces usinées antérieurement avec le fil (4) porté par la bobine (5),
- hauteur des pièces usinées antérieurement avec le fil (4) porté par la bobine (5),
- dates et durées des usinages effectués antérieurement avec le fil (4) porté par la bobine (5),
- passes d'usinage effectuées antérieurement avec le fil (4) porté par la bobine (5).

10. Procédé d'identification d'un fil d'électroérosion (4) conditionné sur une bobine (5) selon l'une des revendications 8 ou 9, **caractérisé en ce que** les données historiques de contrainte comprennent une ou plusieurs des informations choisies à partir du groupe consistant en :
- accélérations subies par la bobine (5) portant le fil (4), provenant d'un accéléromètre (16a) embarqué sur la radio-étiquette (11) ou sur la bobine (5),
- température ambiante subie par la bobine (5) portant le fil (4), provenant d'un capteur de température (16b) embarqué sur la radio-étiquette (11) ou sur la bobine (5),
- hygrométrie subie par la bobine (5) portant le fil (4), provenant d'un capteur d'humidité (16c) embarqué sur la radio-étiquette (11) ou sur la bobine (5),
- longueur ou poids de fil (4) déjà consommé.

11. Dispositif d'usinage par électroérosion, comprenant :
- une machine d'électroérosion à fil (1),
- un fil d'électroérosion (4) conditionné sur une bobine (5),
- un dispositif d'identification selon la revendication 1,
- un dispositif lecteur de données (13), associé à la machine d'électroérosion à fil (1), apte à lire les données d'identification (12) portées par le support de données d'identification (11) de la bobine (5), et apte à transmettre les données d'identification (12) à la machine d'électroérosion à fil (1),
- le dispositif lecteur de données (13) étant un dispositif de communication radiofréquence apte à communiquer avec la radio-étiquette (11),
- le dispositif d'usinage comprenant des moyens d'acquisition (17) pour générer et enregistrer au fil du temps les données d'identification (12) dans le support de données d'identification (11).

12. Dispositif d'usinage par électroérosion selon la revendication 11, **caractérisé en ce que** la machine d'électroérosion à fil (1) met en oeuvre un programme informatique enregistré comprenant une séquence d'acquisition qui génère, transmet et enregistre au fil du temps, dans le support de données d'identification (11), tout ou partie des données historiques d'utilisation du fil (4) par la machine d'électroérosion à fil (1), lesdites données historiques d'utilisation du fil (4) étant choisies à partir du groupe consistant en :
- longueur ou poids de fil (4) consommé par la machine d'électroérosion à fil (1),
- alarmes d'enfilage ou d'usinage rencontrées par la machine d'électroérosion à fil (1) avec le fil (4) porté par la bobine (5),
- programmes d'usinage, technologies d'usinage et paramètres employés par la machine d'électroérosion à fil (1) avec le fil (4) porté par la bobine (5),
- nature des pièces usinées par la machine d'électroérosion à fil (1) avec le fil (4) porté par la bobine (5),
- hauteur des pièces usinées par la machine d'électroérosion à fil (1) avec le fil (4) porté par la bobine (5),
- dates et durées des usinages effectués par la machine d'électroérosion à fil (1) avec le fil (4) porté par la bobine (5),
- passes d'usinage effectuées par la machine d'électroérosion à fil (1) avec le fil (4) porté par la bobine (5).

13. Dispositif d'usinage selon l'une des revendications 11 ou 12, **caractérisé en ce que**, sur la bobine (5), la radio-étiquette (11) est de type active ou semi-active, munie d'une source d'énergie électrique embarquée (15), et associée à des capteurs embarqués (16a, 16b, 16c, 16d) et des moyens de mémorisation (11d) pour scruter et mémoriser des signaux produits par les capteurs embarqués (16a, 16b, 16c, 16d), lesdits signaux constituant des données historiques de contrainte comprenant une ou plusieurs des informations choisies à partir du groupe consistant en :
- accélérations subies par la bobine (5) portant le fil (4), provenant d'un accéléromètre (16a) embarqué sur la radio-étiquette (11) ou sur la bobine (5),
- température ambiante subie par la bobine (5) portant le fil (4), provenant d'un capteur de température (16b) embarqué sur la radio-étiquette (11) ou sur la bobine (5),
- hygrométrie subie par la bobine (5) portant le fil (4), provenant d'un capteur d'humidité (16c) embarqué sur la radio-étiquette (11) ou sur la bobine (5),
- longueur ou poids de fil (4) déjà consommé.

14. Procédé d'usinage par électroérosion sur une machine d'électroérosion à fil (1) au moyen d'un fil d'électroérosion (4) conditionné sur une bobine (5) munie d'un support de données d'identification (11) portant des données d'identification (12) dudit fil (4), **caractérisé en ce que** :
- le procédé d'usinage comprend les étapes du procédé d'identification selon la revendication 8,
- on transfère à la machine d'électroérosion à fil (1) les données d'identification (12) contenues dans le support de données d'identification (11),
- on adapte les paramètres d'usinage en tenant compte notamment des données d'identification (12) provenant du support de données d'identification (11) de la bobine (5) utilisée pour l'usinage.

15. Procédé d'usinage par électroérosion selon la revendication 14, **caractérisé en ce que** les données historiques d'utilisation comprennent une ou plusieurs données historiques choisies à partir du groupe consistant en :
- longueur ou poids de fil (4) déjà consommé,
- alarmes d'enfilage ou d'usinage rencontrées antérieurement avec le fil (4) porté par la bobine (5),
- programmes d'usinage, technologies d'usinage et paramètres employés antérieurement lors d'un usinage par électroérosion avec le fil (4) porté par la bobine (5),
- nature des pièces usinées antérieurement avec le fil (4) porté par la bobine (5),
- hauteur des pièces usinées antérieurement avec le fil (4) porté par la bobine (5),
- dates et durées des usinages effectués antérieurement avec le fil (4) porté par la bobine (5),
- passes d'usinage effectuées antérieurement avec le fil (4) porté par la bobine (5).

16. Procédé d'usinage selon l'une des revendications 14 ou 15, **caractérisé en ce que** les données historiques de contrainte comprennent une ou plusieurs des informations choisies à partir du groupe consistant en :
- accélérations subies par la bobine (5) portant le fil (4), provenant d'un accéléromètre (16a) embarqué sur la radio-étiquette (11) ou sur la bobine (5),
- température ambiante subie par la bobine (5) portant le fil (4), provenant d'un capteur de température (16b) embarqué sur la radio-étiquette (11) ou sur la bobine (5),
- hygrométrie subie par la bobine (5) portant le fil (4), provenant d'un capteur d'humidité (16c) embarqué sur la radio-étiquette (11) ou sur la bobine (5),
- longueur ou poids de fil (4) déjà consommé.

## Patentansprüche

1. Vorrichtung zur Identifizierung eines auf einer Spule (5) konditionierten Funkenerosionsdrahtes (4), umfassend:
- einen Identifikationsdatenträger (11), fest verbunden mit der Spule (5) und zugänglich zum Lesen der von ihm getragenen Identifikationsdaten (12),
- Identifikationsdaten (12) besagten Drahts (4), die von dem Identifikationsdatenträger (11) getragen werden,
**dadurch gekennzeichnet, dass:**
- der Identifikationsdatenträger (11) ein Radiofrequenzetikett ist, in der Lage, mit einer Datenlesevorrichtung (13) zu kommunizieren, die einer Drahtfunkenerosionsmaschine (1) zum Lesen und Schreiben von Identifikationsdaten (12), getragen von dem Identifikationsdatenträger (11) der Spule (5), zugeordnet ist,
- die Identifikationsdaten (12), getragen von den Identifikationsdatenträgern (11), historische Daten umfassen, ausgewählt aus der Gruppe, die aus historischen Daten der Verwendung besteht, beschreibend die Bedingungen früherer Verwendung des Funkenerosionsdrahtes (4), getragen von der Spule (5), und historische Belastungsdaten, beschreibend physikalische Belastungen, denen der Funkenerosionsdraht (4), getragen von der Spule (5), zuvor ausgesetzt war.

2. Vorrichtung zur Identifizierung eines auf einer Spule (5) konditionierten Funkenerosionsdrahtes (4) gemäß Anspruch 1,
**dadurch gekennzeichnet, dass**
- sie ferner eine Datenlesevorrichtung (13) umfasst, zugeordnet einer Drahtfunkenerosionsmaschine (1), die in der Lage ist, die Identifizierungsdaten (12), getragen durch die Identifikationsdatenträger (11) der Spule (5), zu lesen, und in der Lage, die Identifikationsdaten (12) an die Drahtfunkenerosionsmaschine (1) zu übertragen,
- die Datenlesevorrichtung (13) eine RadiofrequenzKommunikationsvorrichtung ist, die in der Lage ist, mit dem Radiofrequenzetikett (11) zu kommunizieren.

3. Vorrichtung zur Identifizierung eines auf einer Spule (5) konditionierten Funkenerosionsdrahtes (4) gemäß Anspruch 2, **dadurch gekennzeichnet, dass** sie Erfassungsmittel (17) umfasst, die in der Funkenerosionsmaschine (1) implementiert sind, zum Versenden und Speichern im Laufe der Zeit in dem Radiofrequenzetikett (11), über die Radiofrequenzkommunikationsvorrichtung (13), von historischen Daten der Verwendung beschreibend die Bedingungen der Verwendung des Funkenerosionsdrahtes (4) durch besagte Funkenerosionsmaschine (1).

4. Vorrichtung zur Identifizierung eines auf einer Spule (5) konditionierten Funkenerosionsdrahtes (4) gemäß einem der Ansprüche 1 bis 3, **dadurch gekennzeichnet, dass** das Radiofrequenzetikett (11) aktiven oder semiaktiven Typs ist, versehen mit einer elektrischen Bordenergiequelle (15) und zugeordnet Bordsensoren (16a, 16b, 16c, 16d) und Mitteln zur Speicherung (11d) zum Abtasten und Speichern der Signale, die von den Bordsensoren (16a, 16b, 16c, 16d) produziert sind, wobei besagte Signale historische Belastungsdaten bilden, die die physikalischen Belastungen beschreiben, denen der Funkenerosionsdraht (4), getragen von der Spule (5), ausgesetzt ist.

5. Vorrichtung zur Identifizierung eines auf einer Spule (5) konditionierten Funkenerosionsdrahtes (4) gemäß einem der Ansprüche 1 bis 4, **dadurch gekennzeichnet, dass** die historischen Verwendungsdaten ein oder mehrere historische Daten, ausgewählt aus der Gruppe, umfassen, bestehend aus:
- Länge oder Gewicht des bereits verbrauchten Drahts (4),
- Einfädel- oder Bearbeitungsalarme, die früher mit dem Draht (4), getragen von der Spule (5), aufgetreten sind,
- Bearbeitungsprogramme, Bearbeitungstechnologien und Parameter, die früher bei der Bearbeitung durch Funkerosion mit dem Draht (4), getragen von der Spule (5), benutzt worden sind,
- Art der Teile, die früher mit dem Draht (4), getragen von der Spule (5), bearbeitet worden sind,
- Höhe der Teile, die früher mit dem Draht (4), getragen von der Spule (5), bearbeitet worden sind,
- Zeitpunkte und Dauern der früher durchgeführten Bearbeitungen mit dem Draht (4), getragen von der Spule (5),
- Bearbeitungsdurchgänge, die früher mit dem Draht (4), getragen von der Spule (5), durchgeführt worden sind.

6. Vorrichtung zur Identifizierung eines auf einer Spule (5) konditionierten Funkenerosionsdrahtes (4) gemäß einem der Ansprüche 1 bis 5, **dadurch gekennzeichnet, dass** die historischen Belastungsdaten eine oder mehrere Informationen, ausgewählt aus der Gruppe, umfassen, bestehend aus:
- erfasste Beschleunigungen der Spule (5), die den Draht (4) trägt, ausgehend von einem Bordbeschleunigungsmesser (16a) auf dem Radiofrequenzetikett (11) oder auf der Spule (5),
- erfasste Umgebungstemperatur der Spule (5), die den Draht (4) trägt, ausgehend von einem Bordtemperatursensor (16b) auf dem Radiofrequenzetikett (11) oder auf der Spule (5),
- erfasste Luftfeuchtigkeit der Spule (5), die den Draht (4) trägt, ausgehend von einem Bordluftfeuchtigkeitssensor (16c) auf dem Radiofrequenzetikett (11) oder auf der Spule (5),
- Länge oder Gewicht des bereits verbrauchten Drahts (4).

7. Vorrichtung zur Identifizierung eines auf einer Spule (5) konditionierten Funkenerosionsdrahtes (4) gemäß Anspruch 6, **dadurch gekennzeichnet, dass** das Radiofrequenzetikett (11) einen Beschleunigungsmesser (16a) und einen elektronischen Verarbeitungsschaltkreis (11c), aufweisend Mittel zum Berechnen der Windungszahl der Spule (5) um ihre Achse als Funktion der vom Beschleunigungsmesser (16a) empfangenen Beschleunigungssignale, umfasst.

8. Verfahren zur Identifizierung eines auf einer Spule (5) konditionierten Funkenerosionsdrahtes (4), versehen mit einem Identifikationsdatenträger (11), tragend Identifikationsdaten (12) besagten Drahtes (4), **dadurch gekennzeichnet, dass:**
- im Laufe der Zeit in dem Identifikationsdatenträger (11) Identifikationsdaten (12) aufgezeichnet werden, wie historische Daten, ausgewählt aus der Gruppe, bestehend aus historischen Verwendungsdaten, beschreibend die Bedingung der Verwendung des Drahtes (4), getragen von der Spule (5) und historische Belastungsdaten, beschreibend die physikalischen Belastungen, denen der Draht (4), getragen von der Spule (5) ausgesetzt ist.

9. Verfahren zur Identifizierung eines auf einer Spule (5) konditionierten Funkenerosionsdrahtes (4) gemäß Anspruch 8, **dadurch gekennzeichnet, dass** die historischen Verwendungsdaten ein oder mehrere historische Daten, ausgewählt aus der Gruppe, umfassen, bestehend aus:
- Länge oder Gewicht des bereits verbrauchten Drahts (4),
- Einfädel- oder Bearbeitungsalarme, die früher mit dem Draht (4), getragen von der Spule (5), aufgetreten sind,
- Bearbeitungsprogramme, Bearbeitungstechnologien und Parameter, die früher bei der Bearbeitung durch Funkerosion mit dem Draht (4), getragen von der Spule (5), benutzt worden sind,
- Art der Teile, die früher mit dem Draht (4), getragen von der Spule (5), bearbeitet worden sind,
- Höhe der Teile, die früher mit dem Draht (4), getragen von der Spule (5), bearbeitet worden sind,
- Zeitpunkte und Dauern der früher durchgeführten Bearbeitungen mit dem Draht (4), getragen von der Spule (5),
- Bearbeitungsdurchgänge, die früher mit dem Draht (4), getragen von der Spule (5), durchgeführt worden sind.

10. Verfahren zur Identifizierung eines auf einer Spule (5) konditionierten Funkenerosionsdrahtes (4) gemäß einem der Ansprüche 8 oder 9, **dadurch gekennzeichnet, dass** die historischen Belastungsdaten eine oder mehrere Informationen, ausgewählt aus der Gruppe, umfassen, bestehend aus:
- erfasste Beschleunigungen der Spule (5), die den Draht (4) trägt, ausgehend von einem Bordbeschleunigungsmesser (16a) auf dem Radiofrequenzetikett (11) oder auf der Spule (5),
- erfasste Umgebungstemperatur der Spule (5), die den Draht (4) trägt, ausgehend von einem Bordtemperatursensor (16b) auf dem Radiofrequenzetikett (11) oder auf der Spule (5),
- erfasste Luftfeuchtigkeit der Spule (5), die den Draht (4) trägt, ausgehend von einem Bordluftfeuchtigkeitssensor (16c) auf dem Radiofrequenzetikett (11) oder auf der Spule (5),
- Länge oder Gewicht des bereits verbrauchten Drahts (4).

11. Vorrichtung zur Bearbeitung durch Funkenerosion, umfassend:
- eine Drahtfunkenerosionsmaschine (1),
- einen auf einer Spule (5) konditionierten Funkenerosionsdraht (4),
- eine Vorrichtung zur Identifizierung gemäß Anspruch 1,
- eine Datenlesevorrichtung (13), zugeordnet der Drahtfunkenerosionsmaschine (1), in der Lage, die Identifikationsdaten (12) zu lesen, die von den Identifikationsdatenträger (11) der Spule (5) getragen sind, und in der Lage zur Übertragung der Identifikationsdaten (12) an die Drahtfunkenerosionsmaschine (1),
- die Datenlesevorrichtung (13) eine Radiofrequenzkommunikationsvorrichtung ist, die in der Lage ist mit dem Radiofrequenzetikett (11) zu kommunizieren,
- die Bearbeitungsvorrichtung Erfassungsmittel (17) zum Erzeugen und Speichern der Identifikationsdaten (12), in dem Identifikationsdatenträger (11), im Laufe der Zeit, umfasst.

12. Vorrichtung zur Bearbeitung durch Funkenerosion, gemäß Anspruch 11, **dadurch gekennzeichnet, dass** die Drahtfunkenerosionsmaschine (1) ein gespeichertes Informatikprogramm implementiert hat, das eine Erfassungssequenz, die ganz oder teilweise historische Verwendungsdaten des Drahtes (4) durch die Drahtfunkenerosionsmaschine (1) im Laufe der Zeit in dem Identifikationsdatenträger (11) erzeugt, überträgt und speichert, umfasst, wobei besagte historische Verwendungsdaten des Drahtes (4) aus der Gruppe ausgewählt sind, bestehend aus:
- Länge oder Gewicht des durch die Drahtfunkenerosionsmaschine (1) verbrauchten Drahts (4),
- Einfädel- oder Bearbeitungsalarme, die durch die Drahtfunkenerosionsmaschine (1) mit dem Draht (4), getragen von der Spule (5), auftreten,
- Bearbeitungsprogramme, Bearbeitungstechnologien und Parameter, die durch die Drahtfunkenerosionsmaschine (1) mit dem Draht (4), getragen von der Spule (5), benutzt werden,
- Art der Teile, die durch die Drahtfunkenerosionsmaschine (1) mit dem Draht (4), getragen von der Spule (5), bearbeitet werden,
- Höhe der Teile, die durch die Drahtfunkenerosionsmaschine (1) mit dem Draht (4), getragen von der Spule (5), bearbeitet werden,
- Zeitpunkte und Dauern der durch die Drahtfunkenerosionsmaschine (1) mit dem Draht (4), getragen von der Spule (5), durchgeführten Bearbeitungen,
- Bearbeitungsdurchgänge, die der durch die Drahtfunkenerosionsmaschine (1) mit dem Draht (4), getragen von der Spule (5), durchgeführt werden.

13. Vorrichtung zur Bearbeitung, gemäß einem der Ansprüche 11 oder 12, **dadurch gekennzeichnet, dass** auf der Spule (5), das Radiofrequenzetikett (11) aktiven oder semiaktiven Typs ist, versehen mit einer elektrischen Bordenergiequelle (15) und zugeordneten Bordsensoren (16a, 16b, 16c, 16d) und Mitteln zur Speicherung (11d) zum Abtasten und Speichern der Signale, die von den Bordsensoren (16a, 16b, 16c, 16d) produziert sind, wobei besagte Signale historische Belastungsdaten bilden, die eine oder mehrere Informationen, ausgewählt aus der Gruppe, umfassen, bestehend aus:
- erfasste Beschleunigungen der Spule (5), die den Draht (4) trägt, ausgehend von einem Bordbeschleunigungsmesser (16a) auf dem Radiofrequenzetikett (11) oder auf der Spule (5),
- erfasste Umgebungstemperatur der Spule (5), die den Draht (4) trägt, ausgehend von einem Bordtemperatursensor (16b) auf dem Radiofrequenzetikett (11) oder auf der Spule (5),
- erfasste Luftfeuchtigkeit der Spule (5), die den Draht (4) trägt, ausgehend von einem Bordluftfeuchtigkeitssensor (16c) auf dem Radiofrequenzetikett (11) oder auf der Spule (5),
- Länge oder Gewicht des bereits verbrauchten Drahts (4).

14. Verfahren zur Bearbeitung durch Funkenerosion auf einer Drahtfunkenerosionsmaschine (1) mittels eines auf einer Spule (5) konditionierten Funkenerosionsdrahts (4), versehen mit einem Identifikationsdatenträger (11), tragend Identifikationsdaten (12) besagten Drahtes (4), **dadurch gekennzeichnet, dass:**
- das Verfahren zu Bearbeitung, die Verfahrensschritte zur Identifizierung gemäß Anspruch 8 umfasst,
- die im Identifikationsdatenträger (11) enthaltenen Identifikationsdaten (12) an die Drahtfunkenerosionsmaschine (1) transferiert werden,
- die Bearbeitungsparameter unter besonderer Berücksichtigung der Identifikationsdaten (12), ausgehend vom Identifikationsdatenträger (11) der zur Spule (5), verwendet zur Bearbeitung, angepasst werden.

15. Verfahren zur Bearbeitung durch Funkenerosion gemäß Anspruch 14, **dadurch gekennzeichnet, dass** die historischen Verwendungsdaten eine oder mehrere historische Daten, ausgewählt aus der Gruppe, umfassen, bestehend aus:
- Länge oder Gewicht des bereits verbrauchten Drahts (4),
- Einfädel- oder Bearbeitungsalarme, die früher mit dem Draht (4), getragen von der Spule (5), aufgetreten sind,
- Bearbeitungsprogramme, Bearbeitungstechnologien und Parameter, die früher bei der Bearbeitung durch Funkerosion mit dem Draht (4), getragen von der Spule (5), benutzt worden sind,
- Art der Teile, die früher mit dem Draht (4), getragen von der Spule (5), bearbeitet worden sind,
- Höhe der Teile, die früher mit dem Draht (4), getragen von der Spule (5), bearbeitet worden sind,
- Zeitpunkte und Dauern der früher durchgeführten Bearbeitungen mit dem Draht (4), getragen von der Spule (5),
- Bearbeitungsdurchgänge, die früher mit dem Draht (4), getragen von der Spule (5), durchgeführt worden sind.

16. Verfahren zur Bearbeitung gemäß einem der Ansprüche 14 oder 15, **dadurch gekennzeichnet, dass** die historischen Belastungsdaten eine oder mehrere der Informationen, ausgewählt aus der Gruppe umfassen, bestehend aus:
- erfasste Beschleunigungen der Spule (5), die den Draht (4) trägt, ausgehend von einem Bordbeschleunigungsmesser (16a) auf dem Radiofrequenzetikett (11) oder auf der Spule (5),
- erfasste Umgebungstemperatur der Spule (5), die den Draht (4) trägt, ausgehend von einem Bordtemperatursensor (16b) auf dem Radiofrequenzetikett (11) oder auf der Spule (5),
- erfasste Luftfeuchtigkeit der Spule (5), die den Draht (4) trägt, ausgehend von einem Bordluftfeuchtigkeitssensor (16c) auf dem Radiofrequenzetikett (11) oder auf der Spule (5),
- Länge oder Gewicht des bereits verbrauchten Drahts (4).

## Claims

1. A device for identifying a spark-erosion wire (4) packaged on a spool (5), comprising:
- an identification data medium (11), fastened to the spool (5) and accessible for reading identification data (12) that it carries,
- identification data (12) of said wire (4), carried by the identification data medium (11),
**characterized in that**:
- the identification data medium (11) is an RFID tag, able to communicate with a data reader device (13) associated with a wire spark-erosion machine (1) for reading and writing the identification data (12) carried by the identification data medium (11) of the spool (5),
- the identification data (12) carried by the identification data medium (11) comprises historical data chosen from the group consisting of use historical data describing earlier use conditions of the spark-erosion wire (4) carried by the spool (5) and stress historical data describing physical stresses to which the spark-erosion wire (4) carried by the spool (5) has previously been subjected.

2. The device as claimed in claim 1 for identifying a spark-erosion wire (4) packaged on a spool (5),
**characterized in that**:
- it further comprises a data reader device (13), associated with a wire spark-erosion machine (1), able to read the identification data (12) carried by the identification data medium (11) of the spool (5), and able to transmit the identification data (12) to the wire spark-erosion machine (1),
- the data reader device (13) is a radio-frequency communication device able to communicate with the RFID tag (11).

3. The device as claimed in claim 2 for identifying a spark-erosion wire (4) packaged on a spool (5), **characterized in that** it comprises acquisition means (17), implemented in the spark-erosion machine (1), for sending and storing on the fly in the RFID tag (11), via the radio-frequency communication device (13), use historical data describing the conditions of use of the spark-erosion wire (4) by said spark-erosion machine (1).

4. The device as claimed in any one of claims 1 to 3, for identifying a spark-erosion wire (4) packaged on a spool (5), **characterized in that** the RFID tag (11) is of the active or semi-active type, provided with an onboard electrical power supply (15) and associated with onboard sensors (16a, 16b, 16c, 16d) and storage means (11d) for scrutinizing and storing the signals produced by the onboard sensors (16a, 16b, 16c, 16d), said signals constituting stress historical data describing the physical stresses to which the spark-erosion wire (4) carried by the spool (5) is subjected.

5. The device as claimed in any one of claims 1 to 4, for identifying a spark-erosion wire (4) packaged on a spool (5), **characterized in that** the use historical data comprises historical data from the following group:
- length or weight of wire (4) already consumed,
- threading or machining alarms encountered previously with the wire (4) carried by the spool (5),
- machining programs, machining technologies and parameters employed previously during spark-erosion machining with the wire (4) carried by the spool (5),
- nature of the parts machined previously with the wire (4) carried by the spool (5),
- height of the parts machined previously with the wire (4) carried by the spool (5),
- dates and durations of machining effected previously with the wire (4) carried by the spool (5),
- machining passes effected previously with the wire (4) carried by the spool (5).

6. The device as claimed in any one of claims 1 to 5, for identifying a spark-erosion wire (4) packaged on a spool (5), **characterized in that** the stress historical data comprises information from the following group:
- accelerations of the spool (5) carrying the wire (4), coming from an onboard accelerometer (16a) on the RFID tag (11) or on the spool (5),
- ambient temperature encountered by the spool (5) carrying the wire (4), coming from an onboard temperature sensor (16b) on the RFID tag (11) or on the spool (5),
- relative humidity encountered by the spool (5) carrying the wire (4), coming from an onboard humidity sensor (16c) on the RFID tag (11) or on the spool (5),
- length or weight of wire (4) already consumed.

7. The device as claimed in claim 6, for identifying a spark-erosion wire (4) packaged on a spool (5), **characterized in that** the RFID tag (11) comprises an accelerometer (16a) and an processor electronic circuit (11c) including means for computing the number of turns effected by the spool (5) about its axis as a function of the acceleration signals received from the accelerometer (16a).

8. A method of identifying a spark-erosion wire (4) packaged on a spool (5) including an identification data medium (11) carrying identification data (12) of said wire (4), **characterized in that**:
- there is stored on the fly by way of identification data (12), in the identification data medium (11), historical data chosen from the group consisting in use historical data describing conditions of use of the wire (4) carried by the spool (5) and stress historical data describing physical stresses to which the wire (4) carried by the spool (5) is subjected.

9. The method according to claim 8 of identifying a spark-erosion wire (4) packaged on a spool (5), **characterized in that** the use historical data comprises historical data from the following group:
- length or weight of wire (4) already consumed,
- threading or machining alarms encountered previously with the wire (4) carried by the spool (5),
- machining programs, machining technologies and parameters employed previously during spark-erosion machining with the wire (4) carried by the spool (5),
- nature of the parts machined previously with the wire (4) carried by the spool (5),
- height of the parts machined previously with the wire (4) carried by the spool (5),
- dates and durations of machining effected previously with the wire (4) carried by the spool (5),
- machining passes effected previously with the wire (4) carried by the spool (5).

10. The method as claimed in either one of claims 8 or 9, for identifying a spark-erosion wire (4) packaged on a spool (5), **characterized in that** the stress historical data comprises information from the following group:
- accelerations of the spool (5) carrying the wire (4), coming from an onboard accelerometer (16a) on the RFID tag (11) or on the spool (5),
- ambient temperature encountered by the spool (5) carrying the wire (4), coming from an onboard temperature sensor (16b) on the RFID tag (11) or on the spool (5),
- relative humidity encountered by the spool (5) carrying the wire (4), coming from an onboard humidity sensor (16c) on the RFID tag (11) or on the spool (5),
- length or weight of wire (4) already consumed.

11. A spark-erosion machining device, comprising:
- a wire spark-erosion machine (1),
- a spark-erosion wire (4) packaged on a spool (5),
- a device for identifying according to claim 1,
- a data reader device (13), associated with the wire spark-erosion machine (1), able to read the identification data (12) carried by the identification data medium (11) of the spool (5), and able to transmit the identification data (12) to the wire spark-erosion machine (1),
- the data reader device (13) being a radio-frequency communication device able to communicate with the RFID tag (11),
- the machining device comprising acquisition means (17) for generating and storing on the fly the identification data (12), in the identification data medium (11).

12. The spark-erosion machining device as claimed in claim 11, **characterized in that** the wire spark-erosion machine (1) executes a stored computer program comprising an acquisition sequence which generates, transmits and stores on the fly, in the identification data medium (11), some or all of the historical data on use of the wire (4) by the wire spark-erosion machine (1), said use historical data of the wire (4) being chosen form the group consisting in:
- length or weight of wire (4) consumed by the wire spark-erosion machine (1),
- threading or machining alarms encountered by the wire spark-erosion machine (1) with the wire (4) carried by the spool (5),
- machining programs, machining technologies and parameters employed by the wire spark-erosion machine (1) with the wire (4) carried by the spool (5),
- nature of the parts machined by the wire spark-erosion machine (1) with the wire (4) carried by the spool (5),
- height of the parts machined by the wire spark-erosion machine (1) with the wire (4) carried by the spool (5),
- dates and durations of the machining effected by the wire spark-erosion machine (1) with the wire (4) carried by a spool (5),
- machining passes effected by the wire spark-erosion machine (1) with the wire (4) carried by the spool (5).

13. The machining device as claimed in either one of claims 11 or 12, **characterized in that**, on the spool (5), the RFID tag (11) is of the active or semi-active type, provided with an onboard electrical power supply (15), and associated with onboard sensors (16a, 16b, 16c, 16d) and storage means (11d) for scrutinizing and storing signals produced by the onboard sensors (16a, 16b, 16c, 16d), said signals constituting stress historical data comprising information from the group consisting of:
- accelerations of the spool (5) carrying the wire (4), coming from an onboard accelerometer (16a) on the RFID tag (11) or on the spool (5),
- ambient temperature encountered by the spool (5) carrying the wire (4), coming from an onboard temperature sensor (16b) on the RFID tag (11) or on the spool (5),
- relative humidity encountered by the spool (5) carrying the wire (4), coming from an onboard humidity sensor (16c) on the RFID tag (11) or on the spool (5),
- length or weight of wire (4) already consumed.

14. A method of machining by spark erosion on a wire spark-erosion machine (1) by means of a spark-erosion wire (4) packaged on a spool (5) provided with an identification data medium (11) carrying identification data (12) of said wire (4), **characterized in that**:
- the method of machining comprises the steps of the method of identifying according to claim 8,
- the identification data (12) contained in the identification data medium (11) is transferred to the wire spark-erosion machine (1),
- the machining parameters are adapted taking into account in particular identification data (12) coming from the identification data medium (11) of the spool (5) used for the machining.

15. The method as claimed in claim 14 of machining by spark-erosion, **characterized in that** the use historical data comprises historical data from the group consisting of:
- length or weight of wire (4) already consumed,
- threading or machining alarms encountered previously with the wire (4) carried by the spool (5),
- machining programs, machining technologies and parameters employed previously during machining by spark-erosion with the wire (4) carried by the spool (5),
- nature of the parts machined previously with the wire (4) carried by the spool (5),
- height of the parts machined previously with the wire (4) carried by the spool (5),
- dates and durations of the machining effected previously with the wire (4) carried by the spool (5),
- machining passes effected previously with the wire (4) carried by the spool (5).

16. The machining method as claimed in either one of claims 14 or 15, **characterized in that** the stress historical data comprises information from the group consisting of:
- accelerations suffered by the spool (5) carrying the wire (4), coming from an onboard accelerometer (16a) on the RFID tag (11) or on the spool (5),
- ambient temperature suffered by the spool (5) carrying the wire (4), coming from an onboard temperature sensor (16b) on the RFID tag (11) or on the spool (5),
- relative humidity suffered by the spool (5) carrying the wire (4), coming from an onboard humidity sensor (16c) on the RFID tag (11) or on the spool (5),
- length or weight of wire (4) already consumed.
